# EUROPÄISCHE PATENTSCHRIFT

(11) **EP 1 279 539 B1**
(45) Veröffentlichungstag und Bekanntmachung des Hinweises auf die Patenterteilung: **05.07.2006**
(21) Anmeldenummer: 02020372.5
(22) Anmeldetag: 23.02.2000
(51) Int. Cl.: B60J 7/12

(54) **Verdeckantrieb**
Tarpaulin drive
Entraînement de bâche

(30) Priorität: 04.03.1999 DE 19909489
(43) Veröffentlichungstag der Anmeldung: 29.01.2003
(62) Teilanmeldung aus: 00103770.4
(73) Patentinhaber: Dr. Ing. h.c. F. Porsche Aktiengesellschaft, 70435 Stuttgart (DE); Gross, Beatrix, 70469 Stuttgart (DE)
(72) Erfinder: Schmidt, Horst, 70469 Stuttgart (DE); Dahmen, Hans-Dieter, 75242 Neuhausen (DE)
(74) Vertreter: Kohler Schmid Möbus

(56) Entgegenhaltungen:
- EP-A- 0 897 823
- US-A- 4 671 559
- US-A- 4 991 903
- US-A- 5 678 881

## Beschreibung

### Stand der Technik

Die Erfindung betrifft einen Verdeckantrieb eines zu öffnenden und zu schließenden Verdecks eines Kraftfahrzeugs mit einer Getriebeeinheit zur Durchführung der Verdeckbewegung und mit einem Elektromotor zum Antreiben der Getriebeeinheit.

Ein derartiger Verdeckantrieb ist beispielsweise durch die DE-PS 34 20 016 C2 bekannt geworden.

Für Roadster, Cabrios oder dergleichen werden Verdeckantriebe benötigt, um ein zusammenfaltbares Fahrzeugdach automatisch öffnen oder schließen zu können. Mit Hilfe des Verdeckantriebs, der mit einem Elektromotor in Verbindung steht, soll das zusammenfaltbare Fahrzeugdach möglichst problemlos bewegt werden können. Es muß auch angestrebt werden, daß der Verdeckantrieb eine hohe Ausfallsicherheit besitzt, so daß das zusammenfaltbare Fahrzeugdach stets dann bewegt werden kann, wenn dies durch den Fahrzeuginsassen gewünscht wird. Zusätzlich muß auch darauf geachtet werden, daß der Verdeckantrieb lediglich eine geringe Geräuschentwicklung verursacht.

Es sind unterschiedlichste Verdeckantriebe denkbar, um ein Verdeckgestänge zu bewegen, über dem das zusammenfaltbare Fahrzeugdach angeordnet ist. Problematisch ist es allerdings, daß innerhalb der vorgenannten Kraftfahrzeugtypen in der Regel nur ein geringer Einbauraum für den Verdeckantrieb zur Verfügung steht. Ein Verdeckantrieb für Roadster, Cabrios oder dergleichen darf daher naturgemäß nur einen geringen Platzbedarf benötigen. Je nach Verdeckantriebgröße oder Gehäuseform kann daher die Montage des Verdeckantriebs Schwierigkeiten bereiten. Hinsichtlich einer Wettbewerbsfähigkeit ist es auch wichtig, den Verdeckantrieb möglichst kostengünstig fertigen zu können.

Im Stand der Technik wird das Planetengetriebe über das Schneckengetriebe mit der Antriebswelle des Elektromotors verbunden, und die Abtriebswelle über das Stirnradgetriebe angetrieben. Außerdem werden ein erstes Gehäuse für das Planetengetriebe und ein zweites Gehäuse für das Stirnradgetriebe benötigt.

### Aufgabe der Erfindung

Die Anmelderin hat sich die Aufgabe gestellt, ein vereinfachtes System für die Ansteuerung eines Verdecks eines Kraftfahrzeugs zu realisieren.

### Gegenstand und Vorteile der Erfindung

Diese Aufgabe wird durch einen Verdeckantrieb gemäß Patentanspruch 1 gelöst. Weiterentwicklungen der Erfindung sind in den Patentansprüchen 2 und 3 beschrieben.

Zur kompakten platzsparenden Bauweise trägt bei, daß ein auf dem Gehäusedeckel montierbares Schaltwerk vorgesehen ist, das mindestens einen Mikroschalter, einen Schalthebel zur Betätigung des mindestens einen Mikroschalters und einen Stecker zur elektrischen Kontaktierung umfaßt.

Zur Ausbildung des Verdeckantriebs in einer flachen Bauweise ist es weiterhin bevorzugt, daß ein scheibenförmiger Planetenträger des Planetengetriebes auf dem Gehäusedeckel drehbar gelagert ist, wobei der kreisförmige Außenumfang des Planetenträgers eine Ausnehmung aufweist, deren Enden Anschläge für auslenkbaren Schalthebel ausbilden. Die integrierte zur Steuerung des mindestens einen Mikroschalters vorgesehene Schaltkurve benötigt keinen zusätzlichen Platzbedarf. Die Schaltkurve ist ähnlich den Getriebezahnrädern möglichst in eine Ebene des Verdeckantriebs gelegt. Das Zusammenwirken der Schaltkurve, der Schalthebel und der elektrischen Mikroschalter trägt zu einer Miniaturisierung eines Verdeckantriebs bei, der sich selbsttätig bei geschlossenem Verdeck und oder bei geöffnetem Verdeck abschalten kann.

Die Verbindung des mechanischen Teils des Verdeckantriebs mit dem elektrischen Schaltwerk zur Steuerung des Elektromotors kann platzsparend realisiert werden, wenn eine Leiterplatte zur elektrischen Verbindung des mindestens einen Mikroschalters und des Steckers vorgesehen ist, der der Verbindung des Schaltwerk nach außen dient. Auf die Leiterplatte sind der Schalthebel und die elektrischen Mikroschalter zu ihrer elektrischen Kontaktierung aufsteckbar. Elektrische Steckverbindungen erleichtern den Einbau und gegebenenfalls den Austausch des Schalthebels und mindestens einen elektrischen Mikroschalters. Darüber hinaus lassen sich kurze elektrische Verbindungswege zwischen Schalthebel und Mikroschalter verwirklichen.

Während der Gehäusedeckel aus einem Werkstoff mit einer hohen Steifigkeit hergestellt werden soll, beispielsweise aus Metall oder einem Verbundwerkstoff, können die Antriebselemente des Verdeckantriebs durch eine dünnwandiges Gehäuse abgedeckt werden, das beispielsweise aus Kunststoff gefertigt werden kann. Das Gehäuse zur Abdeckung des Getriebes ist an dem Gehäusedeckel befestigbar.

### Zeichnung

Weitere Merkmale und Vorteile der Erfindung ergeben sich aus der nachfolgenden Beschreibung eines Ausführungsbeispiels der Erfindung anhand der schematischen Zeichnung, deren Figuren als erfindungswesentliche Einzelheiten zeigen:
- Fig.1: eine Ansicht der Rückseite eines Verdeckantriebs;
- Fig.2: eine Ansicht der Vorderseite des Verdeckantrieb nach Fig. 1;
- Fig. 3: eine Ansicht der Vorderseite des Verdeckantriebs nach den Fign. 1 und 2 mit eingebautem Schaltwerk;
- Fig. 4: eine dreidimensionale Darstellung eines Planetenträgers des Verdeckantriebs nach den Fign. 1 bis 3;
- Fig. 5: das in dem Verdeckantrieb nach den Fign. 1 bis 4 realisierte Getriebeprinzip.

### Beschreibung eines Ausführungsbeispiels

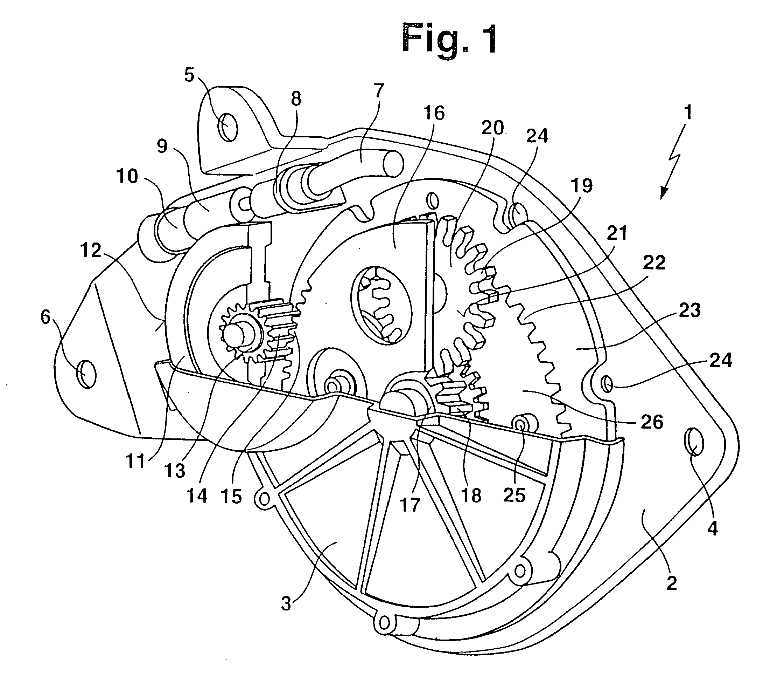

Aus der Fig. 1 ist der Aufbau eines Verdeckantriebs 1 ersichtlich. Auf einem Gehäusedeckel 2 sind die wesentlichen Antriebselemente des Verdeckantriebs 1 befestigt und durch ein Gehäuse 3 nach außen geschützt und abgedeckt. Sowohl das Gehäuse 3 als auch andere Antriebselemente des Verdeckantriebs 1 sind in der Fig. 1 zum besseren Verständnis nur teilweise gezeichnet.

Der Gehäusedeckel 2 weist Durchgangsbohrungen 4 bis 6 auf, um den Gehäusedeckel 2 an der Fahrzeugkarosserie zu befestigen. Der Gehäusedeckel 2 ist im wesentlichen flach ausgebildet und weist eine hohe Steifigkeit auf. Lediglich im Bereich der Durchgangsbohrungen 4 und 5 ist der Gehäusedeckel 2 leicht abgekantet, um die Befestigung des Gehäusedeckels 2 an der Karosserie zu erleichtern. Die im Nachfolgenden einzeln beschriebenen Antriebselemente des Verdeckantriebs 1 sind auf dem Gehäusedeckel 2 zentriert und fixiert, der eine Grundplatte zur Befestigung der Antriebselemente ausbildet.

Innerhalb einer Ummantelung 7 ist eine flexible Antriebswelle geführt, die durch einen Elektromotor angetrieben werden kann. Die Ummantelung 7 und die darin befindliche Antriebswelle können in einen in der Figur nicht sichtbaren Gehäuse abschnitt eingesteckt und verrastet werden. Dies ermöglicht eine leicht durchführbare Ankopplung der Antriebswelle (Schnappverbindung) an eine Schnecke 9. Zwischen einer Lagerschale 8 und einer weiteren Lagerschale 10 ist die Schnecke 9 angeordnet, die mit der Antriebswelle verbunden ist und durch diese bewegt werden kann. Die Schnecke 9 kann vorzugsweise aus Metall gefertigt werden und greift in ein Schneckenrad 11 aus Kunststoff ein. Diese Materialkombination Metall-Kunststoff führt in Kombination mit einer geeigneten Wahl der Zahnform an der Außenumfangsfläche 12 des Schneckenrades 11 dazu, daß nur eine geringe Geräuschentwicklung bei der Übertragung der Drehbewegung von der Antriebswelle auf die Schnecke 9 und das Schneckenrad 11 hervorgerufen wird. Das Schneckenrad 11 ist in seiner Achsrichtung mit einer Zahnwelle 13 verbunden, deren Zähne 14 in Zähne 15 eines Stirnrades 16 eingreifen können. Das Stirnrad 16 wiederum ist in seiner Achsrichtung mit einem Sonnenrad 17 eines Planetengetriebes verbunden, an dessen Zähne 18 Zähne 19 einer Stufe von vier Stufenplanetenrädern 20 in Eingriff sind. Die Stufenplantenräder weisen jeweils eine größere 27 und eine kleinere Stufe 28 auf. In der Figur ist nur die größere Stufe mit der Planetenradseite 21 sichtbar. Die kleinere Stufe greift in Zähne 22 eines Hohlrades 23 ein. Das Hohlrad 23 ist über die Bohrungen 24 durch Befestigungsmittel fest mit dem Gehäusedeckel 2 verbunden. Das Hohlrad 23 ist ebenso wie der Gehäusedeckel 2 ortsfest angeordnet. Mittels Durchprägung lassen sich an der Unterseite des Hohlrades 23 Zapfen ausbilden, die in Ausnehmungen des Gehäusedeckels 2 versenkbar sind. Es wird eine drehfeste Anordnung geschaffen, wobei die entstehenden Reaktionsmomente in den Gehäusedeckel 2 eingeleitet werden können. Die Stufenplanetenräder 20, von denen in der Figur nur eines gezeigt ist, sind auf Aufnahmestiften 25 eines Planetenträgers 26 drehbar gelagert. Der Planetenträger 26 ist ebenfalls drehbar gelagert und mit dem Abtrieb verbunden, an dem das anzutreibende Verdeckgestänge angekoppelt werden kann.

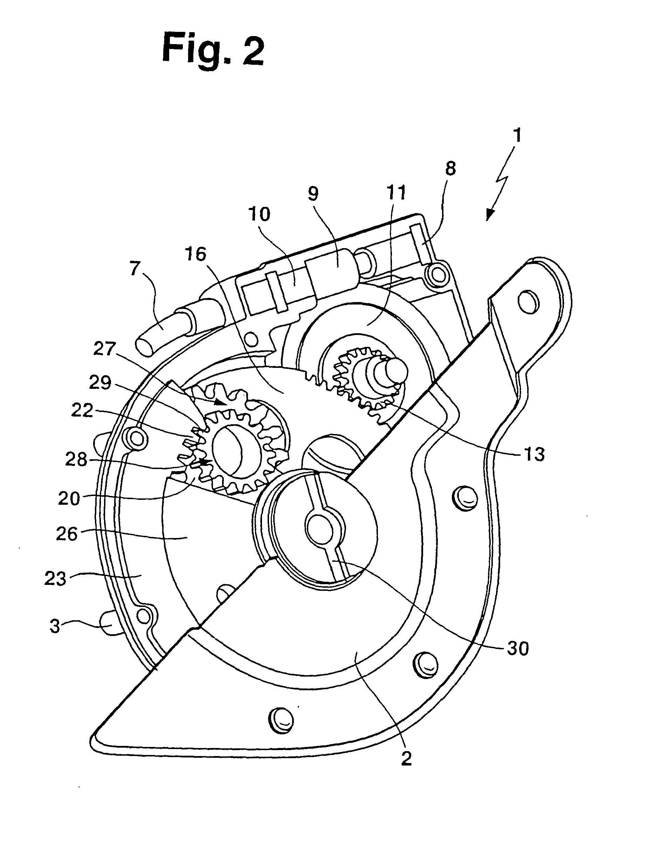

Die Fig. 2 veranschaulicht, daß das Gehäuse 3 einen Hohlraum aufweist, in dem die Schnecke 9 und die Lagerschalen 8 und 10 aufgenommen sind. Die Antriebswelle 7 befindet sich teilweise außerhalb des Gehäuses 3. Die Drehbewegung der Antriebswelle 7 kann über die Schnecke 9, das Schneckenrad 11 und die Zahnwelle 13 auf das Stirnrad 16 übertragen werden. Die einzelnen Stufenplanetenräder 20 weisen die größere Stufe 27 und die kleinere Stufe 28 auf. Während die Stufen 27 durch das mit dem Stirnrad 16 verbundene, in der Fig. 2 nicht sichtbare, Sonnenrad angetrieben werden, sind Zähne 29 der Stufe 28 mit den Zähnen 22 des Hohlrades 23 in Eingriff. Deshalb kann sich der in der Fig. 2 nur teilweise gezeichnete Planetenträger 26 ebenfalls drehen. Aus diesem Grund wird auch die mit dem Planetenträger 26 verbundene Abtriebswelle 30 zur Bewegung des Verdeckgestänges angetrieben.

Das Getriebe dient dazu, die schnelle Rotationsbewegung der Antriebswelle 7 in eine langsame und gleichmäßige Rotationsbewegung der Abtriebswelle 30 zu untersetzen und das Drehmoment zu verstärken.

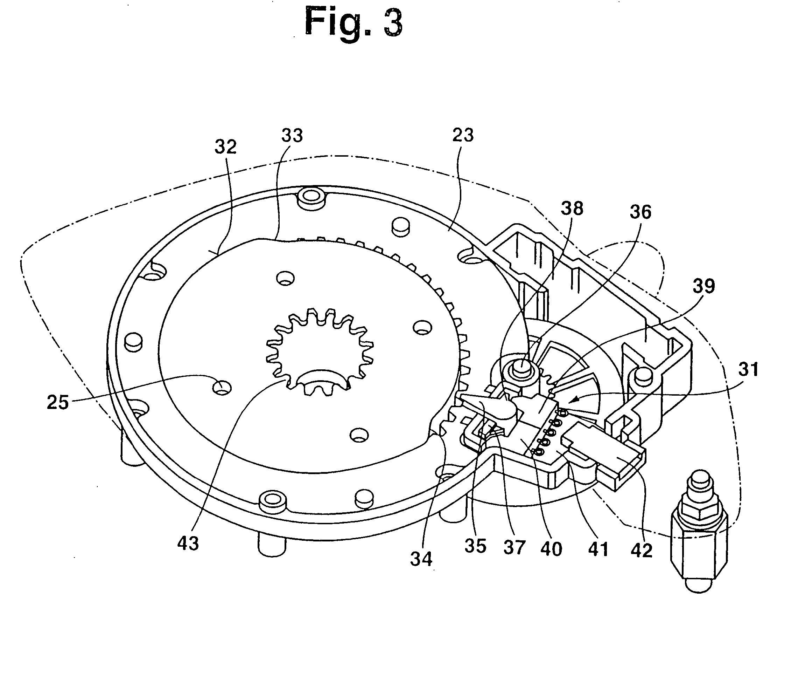

Fig. 3 zeigt das Zusammenwirken des Planetenträgers 26 mit einem Schaltwerk zum Abschalten des Elektromotors bei geschlossenes Verdeck oder bei geöffnetem Verdeck. Die Außenumfangsfläche 32 des Planetenträgers 26, auf dessen vier Aufnahmestiften 25 die Stufenplanetenräder drehbar gelagert sind, weist eine Schaltkurve auf. Die Schaltkurve wird dadurch erzeugt, daß die Außenumfangsfläche 32 durch eine Ausnehmung von der Kreisform abweicht, so daß Anschläge 33 und 34 hergestellt sind. Die Anschläge 33 und 34 befinden sich in einem Abstand von circa 167° und ermöglichen die Auslenkung eines Schalthebels 35, der um eine Achse 36 drehbar gelagert ist. Der Schalthebel 36 weist beidseitig Hebelarme 37 und 38 auf, die bei einer Schwenkbewegung des Schalthebels 35 die elektrischen Mikroschalter 39 und 40 aktivieren können. Beispielsweise kann der Mikroschalter 39 zur Abschaltung des Elektromotors in der geschlossenen Verdeckposition eingesetzt werden, während der andere Mikroschalter 40 zur Abschaltung des Elektromotors in der geöffneten Verdeckposition dient (oder umgekehrt). Die elektrische Kontaktierung der elektrischen Mikroschalter wird durch das Aufstecken auf eine Leiterplatte 41 erreicht, so daß die Mikroschalter 39, 40 mit dem Stecker 42 elektrisch verbunden sind, wiederum mit dem Elektromotor in Verbindung steht. Das Schaltwerk 31 befindet sich in unmittelbarer Nähe am Abtrieb des Verdeckantriebs.

Der Planetenträger 26 besitzt eine Mitnahmeeinrichtung 43 zur formschlüssigen Mitnahme der Abtriebswelle.

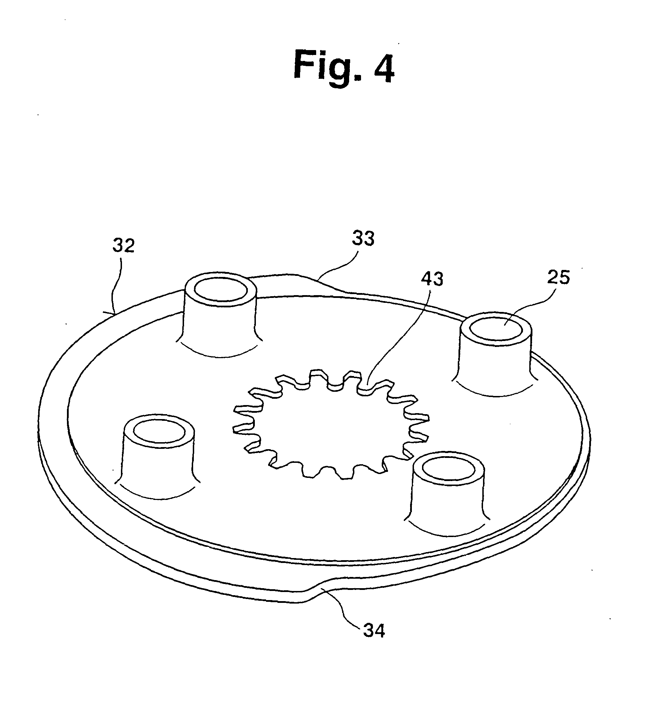

Fig. 4 zeigt die Ausgestaltung des Planetenträgers 26. Auf die Aufnahmestifte 25 können die vier Stufenplanetenräder drehbar aufgesteckt werden. Die Anschläge 33 und 34 sind etwa 167° voneinander entfernt und können den Schalthebel 35 (siehe Fig. 3) auslenken. Die Außenumfangsfläche 32 kann somit eine Schaltkurve erzeugen. Die Mitnahmeeinrichtung 43 ermöglicht es, die Abtriebswelle in Rotation zu versetzen.

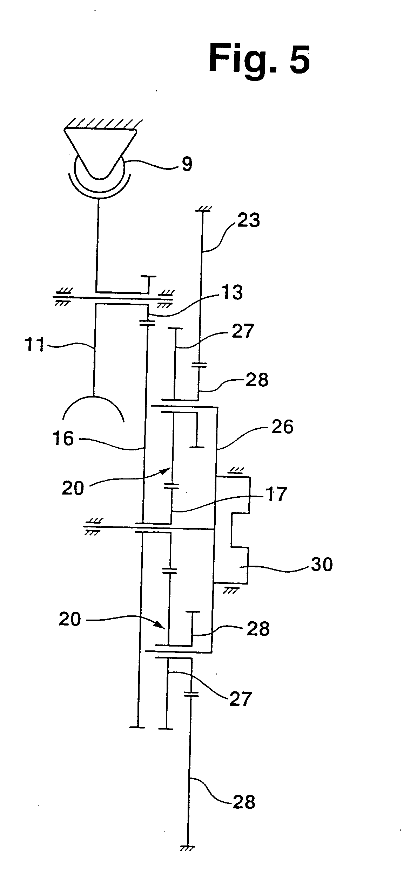

Fig. 5 verdeutlicht das dem Verdeckantrieb zugrundeliegende Getriebeprinzip, in welcher Weise die Rotation der Antriebsfläche in einer Rotation der Abtriebswelle 30 untersetzt wird. Über die Schnecke 9 wird das Schneckenrad 11 angetrieben. Die Zahnwelle 13 versetzt das Stirnrad 16 in Drehung. Das Sonnenrad 17 wirkt mit dem Zahnkranz 27 des Stufenplanetenrades 20 zusammen. Die Zahnkränze 28 stützen sich an dem Hohlrad 23 ab. Der in Rotation versetzte Planetenträger 26 ist mit der Abtriebswelle 30 gekoppelt.

### BEZUGSZEICHEN

- 1: Verdeckantrieb
- 2: Gehäusedeckel
- 3: Gehäuse
- 4: Durchgangsbohrung
- 5: Durchgangsbohrung
- 6: Durchgangsbohrung
- 7: Ummantelung
- 8: Lagerschale
- 9: Schnecke
- 10: Lagerschale
- 11: Schneckenrad
- 12: Außenumfangsfläche
- 13: Zahnwelle
- 14: Zahn
- 15: Zahn
- 16: Stirnrad
- 17: Sonnenrad
- 18: Zahn
- 19: Zahn
- 20: Stufenplanetenrad
- 21: Planetenradseite
- 22: Zahn
- 23: Hohlrad
- 24: Bohrung
- 25: Aufnahmestift
- 26: Planetenträger
- 27: Größere Stufe
- 28: Kleinere Stufe
- 29: Zahn
- 30: Abtriebswelle
- 31: Schaltwerk
- 32: Außenumfangsfläche
- 33: Anschlag
- 34: Anschlag
- 35: Schalthebel
- 36: Achse
- 37: Hebelarm
- 38: Hebelarm
- 39: Mikroschalter
- 40: Mikroschalter
- 41: Leiterplatte
- 42: Stecker
- 43: Mitnahmeeinrichtung

## Patentansprüche

1. Verdeckantrieb (1) eines Kraftfahrzeugs, mit einer in einem Gehäuse (3) untergebrachten, ein Planetengetriebe, ein Stirnradgetriebe und ein Schneckengetriebe umfassenden Getriebeeinheit, dessen Abtrieb (30) zum Öffnen und Schließen eines Verdeckes an ein zu bewegendes Verdeckgestänge ankoppelbar ist, wobei ein einziger im wesentlichen flacher, steifer Gehäusedeckel (2) zur Befestigung der Getriebeeinheit vorgesehen ist, wobei das Schneckengetriebe einerseits mit einer Antriebswelle des Elektromotors verbunden ist und andererseits zum Antrieb des Stirnradgetriebes vorgesehen ist, welches das mit der Abtriebswelle (30) verbundene Planetengetriebe antreibt, **dadurch gekennzeichnet, dass** in der Getriebeeinheit ein Schaltwerk zum Erkennen der Positionen geschlossenes Verdeck bzw. geöffnetes Verdeck angeordnet ist.

2. Verdeckantrieb nach Anspruch 1, **dadurch gekennzeichnet, dass** das Schaltwerk aus mindestens einem Mikroschalter (39, 40), einem Schalthebel (35) zur Betätigung des mindestens einen Mikroschalters umfasst und in der Getriebeeinheit ein scheibenförmiger Träger vorgesehen ist, dessen kreisförmiger Außenumfang eine Ausnehmung aufweist, deren Enden Anschläge für den auslenkbaren Schalthebel bilden.

3. Verdeckantrieb nach Anspruch 2, **dadurch gekennzeichnet, dass** eine Leiterplatte zur elektrischen Verbindung des mindestens einen Mikroschalters und eines Steckers zur elektrischen Kontaktierung des Schaltwerkes vorgesehen ist.

## Claims

1. Drive (1) of a top of an automotive vehicle, comprising a gear unit accommodated in a housing (3) and comprising a planetary gearing, a spur gear and a worm gear, the output (30) of which can be coupled to a rod system of a top to be moved for opening and closing the top, wherein one single, substantially flat, rigid housing lid (2) is provided for mounting the gear unit, wherein the worm gear is connected to a drive shaft of the electromotor and is provided for driving the spur-gear system which drives the planetary gearing connected to said output shaft (30), **characterized in that** the gear unit comprises a control mechanism for detecting the positions closed top and open top, respectively.

2. Drive for a top according to claim 1, **characterised in that** the control mechanism comprises at least one microswitch (39, 40), one switching lever (35) for operating the at least one microswitch, wherein a disc-shaped carrier is provided in the gear unit, the circular outer periphery of the carrier comprising a recess, the ends of which form stops for the deflectable switching lever.

3. Drive for a top according to claim 2, **characterized in that** a printed circuit board is provided for electrically connecting the at least one microswitch to a plug for electric contact with the control mechanism.

## Revendications

1. Entraînement de capote (1) d'un véhicule automobile, comportant une unité de transmission logée dans un boîtier (3) et comprenant un engrenage à planétaires, un engrenage à pignons droits et un engrenage à vis sans fin, dont la sortie (30), pour ouvrir et fermer une capote, peut être accouplée à une tringlerie de capote à mouvoir, dans lequel il est prévu un seul couvercle de boîtier (2) sensiblement plat et rigide pour fixer l'unité de transmission, l'engrenage à vis sans fin étant relié d'une part à un arbre moteur du moteur électrique et étant prévu d'autre part pour entraîner l'engrenage à pignons droits qui entraîne l'engrenage à planétaires relié à l'arbre mené (30), **caractérisé en ce qu'**un dispositif de commutation est agencé dans l'unité de transmission pour reconnaître les positions fermée ou ouverte de la capote.

2. Entraînement de capote selon la revendication 1, **caractérisé en ce que** le dispositif de commutation (31) comprend au moins un microrupteur (39, 40), un levier de commutation (35) pour actionner ledit au moins un microrupteur, et un support en forme de disque est prévu dans l'unité de transmission, dont la périphérie extérieure circulaire présente un évidement dont les extrémités forment des butées pour le levier de commutation mobile.

3. Entraînement de capote selon la revendication 2, **caractérisé en ce qu'**il est prévu une carte à circuits imprimés pour la liaison électrique dudit au moins microrupteur et d'une prise pour la mise en contact électrique du dispositif de commutation.
